# EUROPÄISCHE PATENTSCHRIFT

(11) **EP 3 221 257 B1**
(45) Veröffentlichungstag und Bekanntmachung des Hinweises auf die Patenterteilung: **25.05.2022**
(21) Anmeldenummer: 15798347.9
(22) Anmeldetag: 09.11.2015
(51) Int. Cl.: C01B 3/26, C01B 3/38, C01B 3/00, C01B 3/48

(54) **VERFAHREN UND ANLAGE ZUM ERZEUGEN UND SPEICHERN VON WASSERSTOFF**
METHOD AND INSTALLATION FOR GENERATING AND STORING HYDROGEN
PROCÉDÉ ET INSTALLATION POUR PRODUIRE ET STOCKER DE L'HYDROGÈNE

(30) Priorität: 17.11.2014 DE 102014223427
(43) Veröffentlichungstag der Anmeldung: 27.09.2017
(73) Patentinhaber: HYDROGENIOUS LOHC TECHNOLOGIES GMBH, 91058 Erlangen (DE)
(72) Erfinder: WASSERSCHEID, Peter, 91054 Erlangen (DE); ARLT, Wolfgang, 90425 Nürnberg (DE); TEICHMANN, Daniel, 80796 München (DE)
(74) Vertreter: Rau, Schneck & Hübner Patentanwälte Rechtsanwälte PartGmbB
(86) Internationale Anmeldenummer: PCT/EP2015/076030
(87) Internationale Veröffentlichungsnummer: WO 2016/078948

(56) Entgegenhaltungen:
- US-A- 5 093 535
- US-B2- 7 850 944
- TAUBE M ET AL: "A system of hydrogen-powered vehicles with liquid organic hydrides", INTERNATIONAL JOURNAL OF HYDROGEN ENERGY, ELSEVIER SCIENCE PUBLISHERS B.V., BARKING, GB, Bd. 8, Nr. 3, 1. Januar 1983 (1983-01-01), Seiten 213-225, XP025639517, ISSN: 0360-3199, DOI: 10.1016/0360-3199(83)90067-8 [gefunden am 1983-01-01]
- DANIEL TEICHMANN ET AL: "A future energy supply based on Liquid Organic Hydrogen Carriers (LOHC)", ENERGY & ENVIRONMENTAL SCIENCE, Bd. 4, Nr. 8, 1. Januar 2011 (2011-01-01), Seite 2767, XP055093283, ISSN: 1754-5692, DOI: 10.1039/c1ee01454d
- HAEUSSINGER P ET AL: "HYDROGEN", 1. Januar 1989 (1989-01-01), ULLMANN'S ENCYCLOPEDIA OF INDUSTRIAL CHEMISTRY. HIGH PERFORMANCE FIBERS TO IMIDAZOLE AND DERIVATIVES; [ULLMANN'S ENCYCLOPEDIA OF INDUSTRIAL CHEMISTRY], WEINHEIM, VCH VERLAG, DE, PAGE(S) 297 - 441, XP001109477, Seite 326 - Seite 328; Abbildung 23

## Beschreibung

Die vorliegende Patentanmeldung nimmt die Priorität der deutschen Patentanmeldung DE 10 2014 223 427.1 in Anspruch.

Die Erfindung betrifft ein Verfahren zum Erzeugen und Speichern sowie zum Freisetzen von Wasserstoff.

Aus dem Stand der Technik, insbesondere Taube M. et al.: "A system of hydrogen-powered vehicles with liquid organic hydrides", Daniel Teichmann et al.: "A future energy supply based on Liquid Organic Hydrogen Carriers (LOHC)", Haeussinger P. et al.: "Hydrogen" und US 7,850,944 B2 sind verschiedene Verfahren zur technischen Herstellung von Wasserstoff bekannt. Von besonderer wirtschaftlicher Bedeutung ist die Herstellung von Wasserstoff aus Methan- und Kohlenwasserstoffgemischen, wie sie beispielsweise in Erdgas vorkommen. Die heute verfügbaren Verfahren zur Gewinnung von Wasserstoff aus Erdgas sind aufwändig und insbesondere erst bei großen Anlagengrößen wirtschaftlich rentabel.

Der vorliegenden Erfindung liegt die Aufgabe zugrunde, ein Verfahren zum Erzeugen und Speichern von Wasserstoff zu schaffen, die die Gewinnung von Wasserstoff aus einem Rohstoffgasgemisch, insbesondere unabhängig von der Fördermenge des Rohstoffgases, wirtschaftlich rentabel machen.

Die Aufgabe wird durch Merkmale des Anspruchs 1 gelöst. Der Kern der Erfindung besteht darin, dass ein Zwischengasgemisch mit einem Wasserstoff-Trägermedium kontaktiert wird, um das Wasserstoff-Trägermedium zu hydrieren. In dem Zwischengasgemisch enthaltener Wasserstoff wird unmittelbar an dem Trägermedium gebunden. Andere Komponenten des Zwischengasgemisches reagieren dagegen nicht mit dem Trägermedium und werden nicht an dieses gebunden. Gegenüber einem Rohstoffgasgemisch weist das Zwischengasgemisch einen erhöhten Wasserstoffanteil auf. Der Kohlenmonoxidanteil des Zwischengasgemisches ist vergleichsweise reduziert. Überraschend wurde erkannt, dass das Zwischengasgemisch bei einem Druck und einer Temperatur vorliegt, die geeignet sind, um unmittelbar die Hydrierung des Wasserstoff-Trägermediums durchzuführen. Durch die Hydrierung des Wasserstoff-Trägermediums wird der Wasserstoffanteil des Zwischengasgemisches von Kohlendioxid und Methan abgetrennt, da weder Kohlendioxid noch Methan mit dem Trägermedium reagieren. Dagegen bildet Wasserstoff mit dem Trägermedium chemische Bindungen aus. Insbesondere ist das Wasserstoff-Trägermedium ein Liquid Organic Hydrogen Carrier (LOHC)-Trägermedium, das beispielsweise aus der EP 1 475 349 A2 bekannt ist. Insbesondere liegt das Zwischengasgemisch nach dem Vorbehandeln in einem Druckbereich von 5 bar bis 50 bar, insbesondere in einem Druckbereich von 10 bar bis 40 bar und insbesondere in einem Druckbereich von 25 bar bis 35 bar vor. Insbesondere liegt das Zwischengasgemisch in einem Temperaturbereich von 100 °C bis 400 °C, insbesondere von 120 °C bis 300 °C und insbesondere von 150 °C bis 280 °C vor. Das Zwischengasgemisch kann in dieser Form und unter diesen Bedingungen unmittelbar für die Hydrierung des LOHC-Trägermediums, insbesondere unter Nutzung eines Katalysators, eingesetzt werden. Insbesondere wird ein fester Katalysator verwendet, der als Pulver, als Formkörper oder als strukturiertes Bauteil vorliegen kann. Der Katalysator enthält als aktive Komponente mindestens ein Übergangsmetall, insbesondere Nickel, Ruthenium, Rhodium, Palladium, Platin, Kobalt oder Kupfer. Die aktive Komponente des Katalysators ist insbesondere auf einem anorganischen oder organischen, porösen Trägermaterial verankert und wird in dieser geträgerten Form in der Hydrierung verwendet. Die Hydrierung des LOHC erfolgt insbesondere bei Prozesstemperaturen zwischen 150 °C und 280 °C und bei einem Prozessdruck zwischen 10 bar und 100 bar. Durch das erfindungsgemäße Verfahren ist die bei Verfahren gemäß dem Stand der Technik erforderliche Wasserstoffreinigung, insbesondere eine Kohlendioxidabtrennung, insbesondere für das Zwischengasgemisch, entbehrlich. Insbesondere ist es nicht erforderlich, zunächst Wasserstoff isoliert herzustellen und anschließend zu speichern. Der Wasserstoff wird unmittelbar von dem Zwischengasgemisch an dem Wasserstoff-Trägermedium chemisch gebunden. Wasserstoff des Zwischengasgemisches wird zumindest anteilig und insbesondere vollständig an dem Wasserstoff-Trägermedium chemisch gebunden. Das Kontaktieren des Zwischengasgemisches mit dem Wasserstoff-Trägermedium bewirkt eine, insbesondere selektive, Abreicherung des Wasserstoffs in dem Zwischengasgemisch. Eine Abtrennung anderer Gasbestandteile aus dem Zwischengasgemisch, insbesondere von Stickstoff und/oder Methan, ist nicht erforderlich. Erfindungsgemäß wurde gefunden, dass die Abtrennung bestimmter Gasanteile in dem Zwischengasgemisch entbehrlich ist, da diese Gasbestandteile mit dem Wasserstoff-Trägermedium nicht reagieren. Diese Bestandteile sind für die Hydrierung des Wasserstoff-Trägermediums nicht relevant und insbesondere nicht störend. Das Verfahren ist unkompliziert. Investitionskosten und Betriebskosten sind reduziert. Insbesondere kann eine Vorreinigung, also ein Vorbehandeln des Rohstoffgasgemisches, dazu genutzt werden, um Verunreinigungen, insbesondere Katalysatorgifte wie beispielsweise Kohlenmonoxid oder Sauerstoff, zumindest anteilig zu entfernen. Das erfindungsgemäße Verfahren ermöglicht insbesondere das Erzeugen und Speichern von Wasserstoff aus Erdgas als Rohstoffgasgemisch in kleineren und dezentralen Anlagen unter wirtschaftlich rentablen Bedingungen. Dadurch ist es möglich, kleinvolumige Erdgasquellen, sogenannte Stranded Gas-Quellen für die Erzeugung, die Speicherung und den Transport von Wasserstoff zu nutzen. Das erfindungsgemäße Verfahren erschließt also bislang wirtschaftlich nicht nutzbare und deshalb nicht genutzte Erdgasquellen, bei welchen Erdgas beispielsweise als Begleitgas der Erdölförderung auftritt. Weitere bislang nicht genutzte Erdgasquellen kommen bei der Erdgasexploration und bei der hydraulischen Frakturierung, dem sogenannten Fracking, in Betracht. Insbesondere ist es nicht erforderlich, Begleitgas zurück in den Boden zu injizieren und damit ungenutzt zu lassen. Technisch relevant ist das erfindungsgemäße Verfahren insbesondere zur Überführung von Begleitgas der Erdölförderung, insbesondere auf einer Bohrinsel oder an einer Bohrstation in entlegenen Regionen, in eine transportierbare und lagerbare Form des Wasserstoffs. Das erfindungsgemäße Verfahren erschließt damit kleine und abseits gelegene Erdgasförderstellen für die wirtschaftliche Herstellung von Wasserstoff. Durch die Nutzung zusätzlicher Erdgasquellen für die Wasserstofferzeugung im erfindungsgemäßen Verfahren können die Transportwege von der Erdgasquelle zum Wasserstoffnutzer verkürzt werden. Ein weiterer wesentlicher Vorteil des Verfahrens besteht darin, dass das Zwischengasgemisch, das neben Wasserstoff auch andere Gasbestandteile aufweist, direkt in eine lagerfähige und transportfähige Form überführt wird, aus der unmittelbar Wasserstoff in sehr hoher Reinheit von größer 99 % freisetzbar ist. Aufwändige und teuere Prozessschritte zur Abtrennung von Kohlendioxid, Kohlenwasserstoffresten und gegebenenfalls zur Abtrennung von Stickstoff und Spurengasen sind entbehrlich. Das hydrierte LOHC-Trägermedium ist flüssig und kann in Rohrleitungen, Schiffen oder Tankfahrzeugen aller Art an einen Ort des Wasserstoff-/Energiebedarfs transportiert werden. Dieser Ort kann von dem Ort der Erdgasförderung räumlich entfernt sein. Das mit Wasserstoff beladene LOHC-Trägermedium kann zu einem energiearmen Zeitpunkt, also wenn der Wasserstoffbedarf oder der Energiebedarf besteht, in einer Dehydriereinheit unter Zuführung von Wärme und insbesondere in Gegenwart eines geeigneten Katalysators unter Freisetzung von molekularem Wasserstoff in die dehydrierte des LOHC-Trägermediums überführt werden. Wasserstoff wird in sehr hoher Reinheit zur Verfügung gestellt. Der so erhaltene Wasserstoff kann, insbesondere nach einer Kompression, stofflich, zur Hydrierung einer chemischen Verbindung, oder zur Betankung eines Wasserstofffahrzeugs, aber auch zur Verstromung in einer Brennstoffzelle oder einer Brennkammer genutzt werden.

Das erfindungsgemäße Verfahren kann auch genutzt werden, um ein Zwischengasgemisch aus der Chloralkali-Elektrolyse zu kontaktieren. Bei der Chloralkali-Elektrolyse wird ein Salz, insbesondere Natriumchlorid, das in wässriger Lösung vorliegt, mittels elektrischer Spannung zersetzt. Mittels einer selektiven Membran, die für Natrium-Ionen durchlässig ist und die für Chlor-Ionen undurchlässig ist, werden die Reaktionsprodukte getrennt. Die Chloralkali-Elektrolyse dient hauptsächlich zur Herstellung von Chlor und Natronlauge. Wasserstoffgas fällt als Nebenprodukt an. Erfindungsgemäß wurde gefunden, dass der wegen seiner geringen Dichte und/oder schlechten Transportfähigkeit wirtschaftlich nicht nutzbare Wasserstoff durch Kontaktieren des Zwischengasgemisches in Gegenwart eines Katalysators unmittelbar an dem Wasserstoff-Trägermedium chemisch gebunden werden kann. Eine separate Isolierung des Wasserstoffs ist entbehrlich. Das Zwischengasgemisch bei der Chloralkali-Elektrolyse ist beispielsweise ein Wasserstoff-Stickstoff-Gemisch oder ein Wasserstoff-Argon-Gemisch, bei dem zusätzlich Spuren von Kohlenwasserstoffen oder Sauerstoff vorliegen können. Eine Vorbehandlung des Zwischengasgemisches könnte beispielsweise dadurch erfolgen, dass Sauerstoff zumindest anteilig entfernt wird.

Das erfindungsgemäße Verfahren kann auch genutzt werden, um ein Zwischengasgemisch aus der Biomassevergasung zu kontaktieren. Bei der Biomassevergasung wird Biomasse mit Luft, Wasserdampf, Kohlendioxid, überkritischem Wasser oder Sauerstoff bei Temperaturen von mehr als 400 °C zu einem wasserstoffhaltigen Zwischengasgemisch umgesetzt. Das Wasserstoffgas ist in dem Zwischengasgemisch mit aus dem Stand der Technik bekannten Verfahren nicht unmittelbar technisch verwertbar. Erfindungsgemäß wurde nun gefunden, dass der Wasserstoff aus dem bei der Biomassevergasung gebildeten Zwischengasgemisch durch Kontaktieren in Gegenwart eines Katalysators unmittelbar an dem Wasserstoff-Trägermedium chemisch gebunden werden kann. Eine separate Isolierung des Wasserstoffs ist entbehrlich. Das Zwischengasgemisch bei der Biomassevergasung ist beispielsweise ein Wasserstoff-Kohlendioxid-Gemisch oder ein Wasserstoff-Methan-Gemisch, bei dem zusätzlich Spuren von Wasserdampf, organischen Substanzen oder Sauerstoff vorliegen können. Eine Vorbehandlung des Zwischengasgemisches könnte beispielsweise dadurch erfolgen, dass Schwefel- oder Stickstoffkomponenten zumindest anteilig entfernt werden.

Ein Speichern des hydrierten Wasserstoff-Trägermediums ermöglicht eine vorteilhafte und unmittelbare Handhabung von Wasserstoff in chemisch gebundener Form. Eine separate Handhabung von Wasserstoffgas und alle damit verbundenen Risiken und Probleme sind vermieden. Das hydrierte Wasserstoff-Trägermedium ist unkompliziert handhabbar und hat eine Transportform und Speicherform, die der von Diesel oder anderen Kraftstoffen entspricht. Die physikalisch-chemischen Eigenschaften des hydrierten LOHC-Trägermediums entsprechen im Wesentlichen denen von Diesel und anderen Kraftstoffen.

Ein Verfahren, bei dem ein mindestens eine Kohlenwasserstoff-Verbindung aufweisendes Rohstoffgasgemisch bereitgestellt und derart vorbehandelt wird, dass ein Zwischengasgemisch mit erhöhtem Wasserstoffanteil resultiert, ermöglicht eine vorteilhafte Nutzung von Rohstoffgasgemischen, die mindestens eine Kohlenwasserstoff-Verbindung enthalten. Das Zwischengasgemisch wird aus einem Rohstoffgasgemisch durch Vorbehandeln hergestellt, das mindestens eine Kohlenwasserstoff-Verbindung, insbesondere Methan, aufweist. Das durch Vorbehandeln hergestellte Zwischengasgemisch weist einen Wasserstoffanteil auf, der in einer Mischung mit Kohlendioxid und Methan vorliegt.

Ein Verfahren, bei dem das Vorbehandeln ein Entschwefeln zum Reinigen des Rohstoffgasgemisches von Schwefelverbindungen umfasst, ermöglicht eine geeignete Vorbereitung des Rohstoffgasgemisches. Das Rohstoffgasgemisch ist schwefelfrei.

Bei einem Verfahren, bei dem das Vorbehandeln eine Dampfreformierung, insbesondere in Gegenwart eines Katalysators, insbesondere eines nickelhaltigen Katalysators umfasst, wird das wasserstoffhaltige Zwischengas aus Methan oder Kohlenwasserstoffgemischen erzeugt. Die Dampfreformierung erfolgt in einem Temperaturbereich von 300 °C bis 1300 °C, insbesondere in einem Temperaturbereich zwischen 400 °C und 1100 °C und insbesondere in einem Temperaturbereich zwischen 600 °C und 1000 °C. Insbesondere erfolgt die Dampfreformierung bei einem Druck von 3 bar bis 80 bar, insbesondere von 10 bar bis 50 bar und insbesondere von 15 bar bis 35 bar. Dadurch ist eine spätere Kompression des gebildeten Wasserstoffs entbehrlich. Das Verfahren ist dadurch zusätzlich vereinfacht.

Ein Verfahren, bei dem die Dampfreformierung mehrstufig, insbesondere zweistufig, erfolgt, erleichtert das Erreichen einer für die Dampfreformierung erforderlichen Temperatur, um das Rohstoffgasgemisch weitgehend vollständig umsetzen zu können. In einer ersten Reformierungsstufe wird eine erste Temperatur erreicht, die insbesondere nicht ausreicht, um das Rohstoffgasgemisch vollständig umsetzen. In einer zweiten Reformierungsstufe wird durch Zugabe von Luft und Teilverbrennung eines in der ersten Reformierungsstufe gebildeten Zwischenproduktes, insbesondere durch Teilverbrennung des in der ersten Reformierungsstufe gebildeten Wasserstoffs, in einem zweiten Reformer die für die Dampfreformierung erforderliche Temperatur erreicht. Die zweite Temperatur der zweiten Reformierungsstufe ist größer als die erste Temperatur der ersten Reformierungsstufe.

Bei einem Verfahren, bei dem das Vorbehandeln eine Wassergas-Shift-Reaktion, insbesondere in Gegenwart eines Katalysators, umfasst, kann der Wasserstoffanteil gegenüber dem Rohstoffgasgemisch erhöht werden. Zusätzlich kann der Kohlenmonoxidanteil des Zwischengasgemischs reduziert werden. Die Wassergas-Shift-Reaktion umfasst eine Reaktion von Kohlenmonoxid mit Wasser zu Kohlendioxid und Wasserstoff. Die Wassergas-Shift-Reaktion erfolgt in einem Temperaturbereich zwischen 100°C und 500 °C, insbesondere zwischen 150 °C und 450 °C und insbesondere zwischen 180 °C und 400 °C. Während der Wassergas-Shift-Reaktion beträgt ein Prozessdruck zwischen 3 bar und 80 bar, insbesondere zwischen 10 bar und 50 bar und insbesondere zwischen 20 bar und 40 bar.

Bei einem Verfahren, bei dem Wassergas-Shift-Reaktion mehrstufig, insbesondere zweistufig, erfolgt, ist die Reduzierung des Kohlenmonoxidanteils und/oder die Erhöhung des Wasserstoffanteils in dem Zwischengasgemisch verbessert. In einer ersten Wassergas-Shift-Reaktionsstufe liegt die Prozesstemperatur zwischen 300 °C und 500 °C. In der ersten Wassergas-Shift-Reaktionsstufe wird insbesondere ein fester Eisen/Chrom-Katalysator genutzt, um insbesondere eine hohe Reaktionsgeschwindigkeit bei hohen Prozesstemperaturen zu nutzen. In einer zweiten Wassergas-Shift-Reaktion liegen die Prozesstemperaturen zwischen 80 °C und 300 °C, insbesondere zwischen 100 °C und 280 °C und insbesondere zwischen 120 °C und 250 °C. In der zweiten Wassergas-Shift-Reaktionsstufe kann beispielsweise ein Kupfer/Zinkoxid-Katalysator oder ein geträgerter Katalysator auf Ru-Basis genutzt werden, um insbesondere eine verbesserte Umsetzung von Kohlenmonoxid, eine Reduzierung des Kohlenmonoxidanteils in dem Zwischengasgemisch, zu erreichen. Bei der zweistufigen Wassergas-Shift-Reaktion beträgt der Kohlenmonoxidanteil im Zwischengasgemisch typischerweise weniger als 0,5 Vol-%, insbesondere etwa 0,2 Vol-%. Der Kohlendioxidanteil beträgt zwischen 10 Vol-% und 15 Vol-% und insbesondere zwischen 12,5 Vol-% und 13 Vol-%. Der Wasserstoffanteil beträgt nach der zweistufigen Wassergas-Shift-Reaktion mindestens 40 Vol-%, insbesondere mindestens 42 Vol-%, insbesondere mindestens 44 Vol-% und insbesondere höchstens 50 Vol-%. Es sind auch Verfahren denkbar, bei welchen der Wasserstoffanteil mehr als 50 Vol-% beträgt. Das Volumenverhältnis von Kohlendioxid zu Wasserstoff beträgt etwa 1:3,5.

Bei einem Verfahren, bei dem das Vorbehandeln eine selektive Entfernung von Kohlenmonoxid, insbesondere nach einer Wassergas-Shift-Reaktion, umfasst besteht das Zwischengasgemisch nach der selektiven Entfernung von Kohlenmonoxid im Wesentlichen aus Wasserstoff, Kohlendioxid, Wasserdampf und Methan. Die selektive Entfernung von Kohlenmonoxid bedeutet, dass ein maximaler Anteil von Kohlenmonoxid höchstens 50 ppm und insbesondere höchstens 10 ppm beträgt. Die selektive Entfernung des Kohlenmonoxids erfolgt vorzugsweise durch selektive Hydrierung von Kohlenmonoxid zu Methan an einem Hydrierkontakt, insbesondere auf Nickelbasis oder Kobaltbasis. Die Prozesstemperaturen der selektiven Hydrierung liegen zwischen 50 °C und 600 °C, insbesondere zwischen 100 °C und 500 °C und insbesondere zwischen 150 °C und 400 °C. Alternativ oder zusätzlich zu der selektiven Kohlenmonoxidhydrierung kommen eine selektive Kohlenmonoxidoxidation zu Kohlendioxid, eine Kohlenmonoxid-Adsorption oder eine Kohlenmonoxid-Wäsche in Betracht.

Ein Verfahren, bei dem das Vorbehandeln eine selektive Entfernung von Wasser, insbesondere nach einer Wassergas-Shift-Reaktion, umfasst, verbessert die Effektivität des Verfahrens, insbesondere die Konzentration des Wasserstoffs im Zwischengasgemisch. Die selektive Entfernung des Wassers aus dem Zwischengasgemisch kann teilweise oder vollständig erfolgen. Die selektive Entfernung des Wassers kann beispielsweise durch ein Austauen in einem Teilkondensator, durch Adsorption oder durch Absorption erfolgen. Derartige Verfahren sind an sich bekannt.

Ein Verfahren, bei dem ein Dehydrieren des hydrierten Wasserstoff-Trägermediums zum Freisetzen von Wasserstoff erfolgt, ermöglicht die unmittelbare Nutzung von Wasserstoff. Die Nutzung von Wasserstoff, der aus Erdgas gewonnen worden ist, ist vereinfacht. Insbesondere ist es denkbar, dass das Dehydrieren räumlich entfernt von dem Erzeugen und Speichern des Wasserstoff und des hydrierten Wasserstoff-Trägermediums erfolgt. Das hydrierte Wasserstoff-Trägermedium kann beispielsweise über ein dafür vorgesehenes Leitungsnetz und/oder mittels Transportmitteln wie beispielsweise Tankfahrzeugen unkompliziert transportiert werden.

Ein Verfahren, bei dem ein Zuführen von dehydriertem Wasserstoff-Trägermedium ermöglicht ist, bietet ein unkompliziertes Bereitstellen von Wasserstoff-Trägermedium, um Wasserstoff chemisch zu binden. Das Zuführen des dehydrierten Wasserstoff-Trägermediums erfolgt insbesondere über eine Wasserstoff-Trägermedium-Schnittstelle.

Ein Verfahren, bei dem das Abführen von hydriertem Wasserstoff-Trägermedium vorgesehen ist, vereinfacht die Erschließung und Nutzung von Gasquellen, die bislang insbesondere unter wirtschaftlichen Aspekten als nicht rentabel galten. Für das Abführen des hydrierten Wasserstoff-Trägermediums kann eine, insbesondere eine weitere, Wasserstoff-Trägermedium-Schnittstelle dienen. Das hydrierte, also beladene, Wasserstoff-Trägermedium, kann mittels einer dafür vorgesehenen Leitung und/oder mittels Tankfahrzeugen, abtransportiert werden.

Ein Verfahren, bei dem ein Nutzen von Kohlendioxid erfolgt, ermöglicht eine technische Nutzung des so erhaltenen kohlendioxidreichen Gases. Das kohlendioxidreiche Gas kann beispielsweise als Hilfsstoff für die Ölförderung, insbesondere bei der tertiären Ölgewinnung, der sogenannten Enhanced Oil Recovery, verwendet werden. Es ist auch eine stoffliche Nutzung des Kohlendioxids, insbesondere in der chemischen oder petrochemischen Industrie oder zur Erzeugung von Biomasse, beispielsweise in einer Algenfarm oder einem geeigneten Fermentationsprozess, möglich. Insbesondere ist eine aufwändige Abtrennung von Kohlendioxid von Wasserstoff entbehrlich. Das Nutzen von Kohlendioxid erfolgt insbesondere nach dem Hydrieren des Wasserstoff-Trägermediums. Es ist ein wesentlicher Vorteil des erfindungsgemäßen Verfahrens, dass nach dem Kontaktieren des Zwischengasgemisches mit dem Wasserstoff-Trägermedium Kohlendioxid in vergleichsweise konzentrierter Form vorliegt. Eine typische Zusammensetzung des Restgases nach dem vollständigen Entfernen des Wasserstoffs aus dem Zwischengasgemisch durch Hydrieren des Wasserstoff-Trägermediums enthält über 20 Vol-% Kohlendioxid. Die übrigen Gase sind Wasserdampf, Stickstoff und Spurengase. Der Kohlendioxidgehalt ist wesentlich höher als in der Luft oder als in Abgasen von Verbrennungsanlagen, die mit fossilen Rohstoffen befeuert werden.

Das Restgas kann nach der Hydrierung des Wasserstoff-Trägermediums gewisse Mengen an Wasserstoff enthalten. In diesem Fall kann das Restgas vorteilhaft zu Heizzwecken eingesetzt werden. Der in dem Restgas vorhandene Wasserstoff wird thermisch verwertet. Durch die thermische Verwertung kann der Wasserstoffanteil in dem Restgas auf unter 1 Vol-% reduziert werden. Dieses Restgas mit einem vergleichsweise hohen Kohlendioxidgehalt kann, wie oben beschrieben, technisch verwendet werden.

Das Vorbehandeln kann alternativ auch die Überführung des Rohstoffgasgemisches in Wasser und Koks, insbesondere bei einer Temperatur von über 800 °C, umfassen. Diese Überführung ist als Kvaerner-Verfahren bekannt. Ein im Kvaerner-Verfahren erzeugtes Zwischengasgemisch weist einen erhöhten Wasserstoffanteil und/oder einen reduzierten Kohlenmonoxidanteil auf. Dieses Zwischengasgemisch kann erfindungsgemäß unmittelbar zur Hydrierung des Wasserstoff-Trägermediums genutzt werden.

Eine Anlage zum Erzeugen und Speichern von Wasserstoff, die nicht Teil der Erfindung ist, dient insbesondere zur Durchführung eines Verfahrens gemäß den vorstehenden Ansprüchen. Die Anlage umfasst eine Vorbehandlungsvorrichtung zum Vorbehandeln des Rohstoffgasgemisches zu einem Zwischengasgemisch mit gegenüber dem Rohstoffgasgemisch erhöhtem Wasserstoffanteil und/oder mit reduziertem Kohlenmonoxidanteil. Die Anlage umfasst ferner einen Reaktionsapparat zum Kontaktieren des Zwischengasgemisches mit dem Wasserstoff-Trägermedium zum Hydrieren des Wasserstoff-Trägermediums. Die Vorbehandlungsvorrichtung umfasst insbesondere eine Entschwefelungseinheit, eine Dampfreformierungseinheit, die insbesondere eine erste Dampfreformierungsstufe und eine zweite Dampfreformierungsstufe aufweist, sowie eine Wassergas-Shift-Einheit zur Durchführung der Wassergas-Shift-Reaktion, wobei die Wassergas-Shift-Einheit insbesondere einen ersten Wassergas-Shift-Reaktor und einen zweiten Wassergas-Shif-Reaktor umfasst. Die Wassergas-Shift-Einheit ist insbesondere ein adiabat betriebener Festbettreaktor. Bei der Durchführung einer zweistufigen Wassergas-Shift-Reaktion können zwei in Reihe betriebene Festbettreaktoren verwendet werden.

Eine Anlage, die nicht Teil der Erfindung ist, bei der der Reaktionsapparat als Rieselbettreaktor ausgeführt ist, ermöglicht eine verbesserte Hydrierung des Wasserstoff-Trägermediums mit dem Zwischengasgemisch. Alternativ ist ein Blasensäulenreaktor oder ein begaster und gerührter Suspensionsreaktor denkbar.

Eine Anlage, die nicht Teil der Erfindung ist, mit einer ersten Speichereinheit zum Speichern des hydrierten Wassertoff-Trägermediums ermöglicht die Speicherung des Wasserstoffs in chemisch gebundener Form am Ort der Erzeugung. Die Handhabung des erzeugten und gespeicherten Wasserstoffs ist vereinfacht.

Eine Anlage, die nicht Teil der Erfindung ist, mit einer Dehydriereinheit zum Dehydrieren des hydrierten Wasserstoff-Trägermediums ermöglicht das unmittelbare Freisetzen des erzeugten und gespeicherten Wasserstoffs in sehr reiner Form. Aus Erdgas erzeugter reiner Wasserstoff kann beispielsweise direkt mittels einer Brennstoffzelle verstromt werden.

Eine Anlage, die nicht Teil der Erfindung ist, kann zusätzlich eine erste Wasserstoff-Trägermedium-Schnittstelle aufweisen, um hydriertes, also beladenes, Wasserstoff-Trägermedium von der Anlage abzutransportieren. Das beladene Wasserstoff-Trägermedium ist besonders komfortabel handhabbar und kann beispielsweise über bereits existierende Leitungssysteme und/oder Tankfahrzeuge transportiert werden. Ein Entladen des hydrierten Wasserstoff-Trägermediums, insbesondere während eines energiearmen Zeitraums, und/oder insbesondere an einem räumlich entfernten Ort, ist dadurch ermöglicht. Die Anlage kann zudem eine zweite Wasserstoff-Trägermedium-Schnittstelle zum Zuführen von dehydriertem, also unbeladenem, Wasserstoff-Trägermedium aufweisen. Es ist möglich, Wasserstoff-Trägermedium zuzuführen, das mit Wasserstoff beladen werden soll. Es ist insbesondere nicht erforderlich, große Speicherkapazitäten für das unbeladene Wasserstoff-Trägermedium bereitzustellen und gleichzeitig eine zuverlässige Versorgung mit Wasserstoff-Trägermedium zu gewährleisten. Es ist sichergestellt, dass Wasserstoff, der insbesondere bei einer Erdgasquelle bei Verwendung des erfindungsgemäßen Verfahrens kontinuierlich anfällt, zuverlässig genutzt werden kann, da ein Vorrat an unbeladenem Wasserstoff-Trägermedium immer zur Verfügung steht.

Weitere vorteilhafte Ausgestaltungen, zusätzliche Merkmale und Einzelheiten der Erfindung ergeben sich aus der nachfolgenden Beschreibung eines Ausführungsbeispiels anhand der Zeichnung. Es zeigen:

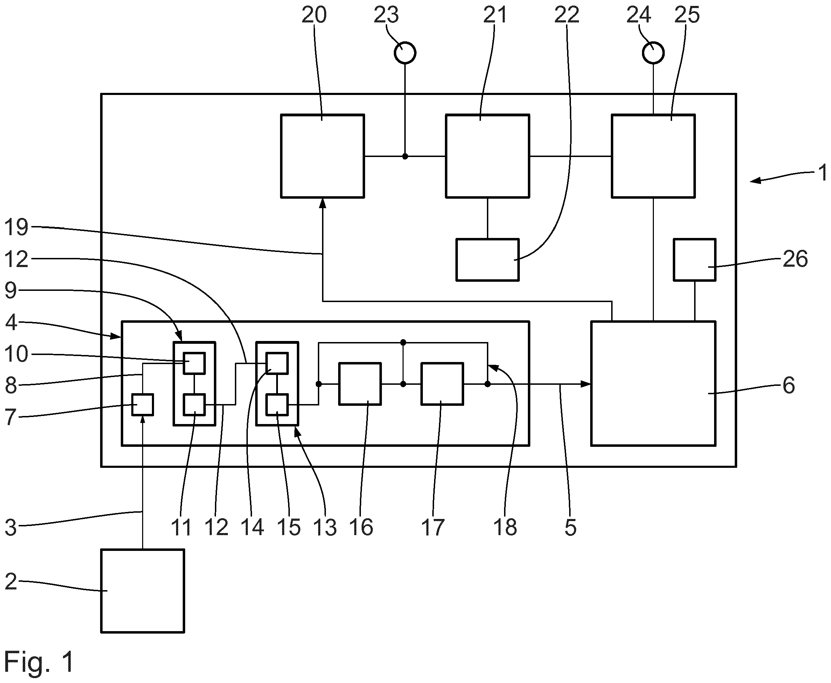

Fig. 1 eine schematische Darstellung einer Anlage, die nicht Teil der Erfindung ist, zum Erzeugen und Speichern von Wasserstoff.

Fig. 1 zeigt eine Anlage 1 zum Erzeugen und Speichern von Wasserstoff aus Erdgas. Erdgas ist ein Rohstoffgasgemisch, das eine oder mehrere Kohlenwasserstoff-Verbindungen und insbesondere Methan aufweist. Die Anlage 1 ist mit einer Erdgasquelle 2 über eine Erdgasleitung 3 verbunden. Die Anlage 1 weist eine Vorbehandlungsvorrichtung 4 zum Vorbehandeln des Rohstoffgasgemisches zu einem Zwischengasgemisch auf. Die Vorbehandlungsvorrichtung 4 ist über eine Zwischengasgemischleitung 5 mit einem Reaktionsapparat 6 verbunden.

Die Vorbehandlungsvorrichtung 4 umfasst eine Entschwefelungseinheit 7 zum Reinigen des Rohstoffgasgemisches von Schwefelverbindungen. Die Entschwefelungseinheit 7 ist insbesondere unmittelbar an die Erdgasleitung 3 angeschlossen. Die Entschwefelungseinheit 7 ist über eine Leitung 8 mit einer Dampfreformiereinheit 9 verbunden. Die Dampfreformiereinheit 9 umfasst eine erste Dampfreformierungsstufe 10 und eine der ersten Dampfreformierungsstufe 10 nachgeordnete zweite Dampfreformierungsstufe 11. Über eine weitere Leitung 12 ist die Dampfreformiereinheit 9 mit einer Wassergas-Shift-Reaktionseinheit 13 verbunden. Die Wassergas-Shift-Reaktionseinheit 13 umfasst einen ersten Wassergas-Shift-Reaktor 14 und einen dem ersten Wassergas-Shift-Reaktor 14 nachgeordneten zweiten Wassergas-Shift-Reaktor 15. Die Wassergas-Shift-Reaktionseinheit 13 ist mit einer Kohlenmonoxidentfernungseinheit 16 und einer Wasserentfernungseinheit 17 verbunden. Ein dafür vorgesehenes Verbindungsleitungssystem 18 ermöglicht eine wahlweise Zuschaltung der Kohlenmonoxidentfernungseinheit 16 und der Wasserentfernungseinheit 17 in der Vorbehandlungsvorrichtung 4. Das bedeutet, dass die Vorbehandlungsvorrichtung 4 mit der Kohlenmonoxidentfernungseinheit 16 und/oder mit der Wasserentfernungseinheit 17 oder keiner der beiden Einheiten betrieben werden kann. Das Verbindungsleitungssystem 18 ist unmittelbar an die Zwischengasgemischleitung 5 angeschlossen.

Der Reaktionsapparat 6 ist insbesondere als Rieselbettreaktor ausgeführt. Der Reaktionsapparat 6 dient als Hydriereinheit zum Hydrieren eines Wasserstoff-Trägermediums mit dem Wasserstoff des Zwischengasgemisches. Der Reaktionsapparat 6 enthält einen festen Hydrierkatalysator. Als Wasserstoff-Trägermedium dient LOHC. Der Reaktionsapparat 6 ist über eine Wasserstoff-Trägermedium-Leitung 19 mit einer ersten Speichereinheit 20 zum Speichern des hydrierten Wasserstoff-Trägermediums verbunden. Aus der ersten Speichereinheit 20 kann das hydrierte Wasserstoff-Trägermedium einer Dehydriereinheit 21 zum Dehydrieren des hydrierten Wasserstoff-Trägermediums zugeführt werden. In der Dehydriereinheit 21 wird Wasserstoff freigesetzt. Der freigesetzte Wasserstoff kann einer Wasserstoffverwertungseinheit 22 zugeführt werden. Alternativ zu der Dehydriereinheit 21 kann eine erste Wasserstoff-Trägermedium-Schnittstelle 23 vorgesehen sein. Die erste Wasserstoff-Trägermedium-Schnittstelle 23 kann beispielsweise den Transport des hydrierten Wasserstoff-Trägermediums mit Tankfahrzeugen oder über eine geeignete Pipeline vorsehen. Entsprechend kann eine zweite Wasserstoff-Trägermedium-Schnittstelle 24 vorgesehen sein, die es ermöglicht, der Anlage 1 unbeladenes Wasserstoff-Trägermedium zuzuführen, insbesondere in Form von Tankfahrzeugen oder einer dafür vorgesehenen Pipeline. Zusätzlich kann eine zweite Speichereinheit 25 vorgesehen sein, in der das nicht hydrierte Wasserstoff-Trägermedium gespeichert wird, insbesondere bevor es dem Reaktionsapparat zum Hydrieren zugeführt wird.

Der Reaktionsapparat 6 als Hydriereinheit, die erste Speichereinheit 20, die Dehydriereinheit 21 und die zweite Speichereinheit 25 können ein, insbesondere geschlossenes, Kreislaufsystem bilden.

An den Reaktionsapparat 6 angeschlossen ist eine Einheit 26 zur unmittelbaren Verwendung des kohlendioxidreichen Gases aus der Hydriereinheit oder eine Isoliereinheit für Kohlendioxid.

Nachfolgend wird ein Verfahren zum Erzeugen und Speichern von Wasserstoff näher erläutert. Mittels einer Erdgasquelle 2, beispielsweise einer Stranded Gas-Quelle wird Erdgas über die Erdgasleitung 3 der Vorbehandlungsvorrichtung 4 der Anlage 1, insbesondere und insbesondere der Entschwefelungseinheit 7 zugeführt. In der Entschwefelungseinheit 7 wird das Erdgas von Schwefelverbindungen gereinigt. Das gereinigte Erdgas wird einer zweistufigen Dampfreformierung unterzogen. Dazu wird das von Schwefelverbindungen gereinigte Erdgas über die Leitung 8 einer ersten Dampfreformierungsstufe 10 der Dampfreformierungseinheit 9 zugeführt. Dort erfolgt eine Dampfreformierung bei einer ersten Temperatur. Ein in der ersten Dampfreformierungsstufe 10 erzeugbares Gasgemisch wird der zweiten Dampfreformierungsstufe 11 zugeführt. Durch Zugabe von Luft und einer Teilverbrennung des in der ersten Dampfreformierungsstufe 10 teilweise gebildeten Gasgemisches kann in der zweiten Dampfreformierungsstufe eine erhöhte Prozesstemperatur von beispielsweise 600 °C bis 1.000 °C erreicht werden. Die Dampfreformierung erfolgt in Gegenwart eines nickelhaltigen Katalysators. Die Dampfreformierung erfolgt bei einem Druck von insbesondere 20 bar bis 40 bar. Eine spätere Kompression des Wasserstoffs ist damit entbehrlich.

Das dampfreformierte Gasgemisch wird der Wassergas-Shift-Reaktionseinheit 13 über die Leitung 12 zugeführt. In dem ersten Wassergas-Shift-Reaktor 14 wird Kohlenmonoxid in dem Gasgemisch mit Wasser zu Kohlendioxid und Wasserstoff umgesetzt. In dem ersten Wassergas-Shift-Reaktor 14 beträgt die Prozesstemperatur 300 °C bis 500 °C. Dazu wird ein fester Eisen/Chrom-Katalysator eingesetzt. In dem zweiten Wassergas-Shift-Reaktor 15 wird bei reduzierten Temperaturen, insbesondere in einem Bereich von 180 °C bis 300 °C, mittels eines festen Kupfer/Zinkoxid-Katalysators eine besonders effektive, nahezu vollständige, Umsetzung von Kohlenmonoxid durchgeführt. Die Wassergas-Shift-Reaktoren 14, 15 sind insbesondere als adiabat betreibbare Festbettreaktoren ausgeführt.

Nach der Wassergas-Shift-Reaktion kann im Rahmen des Vorbehandelns das Gasgemisch einer selektiven Entfernung von Kohlenmonoxid in der Kohlenmonoxidentfernungseinheit 16 und/oder eine selektive Entfernung Wasser in der Wasserentfernungseinheit 17 unterzogen werden.

Im Ergebnis wird durch das Vorbehandeln in der Vorbehandlungsvorrichtung 4 ein Zwischengasgemisch bereitgestellt, das gegenüber dem Erdgas als Rohstoffgasgemisch einen erhöhten Wasserstoffanteil aufweist. Ein beim Dampfreformieren gebildeter Kohlenmonoxidanteil ist durch die Prozessschritte der Vorbehandlungsvorrichtung 4 derart gering, dass er für eine nachfolgende Hydrierung unproblematisch ist.

Das Zwischengasgemisch wird dem Reaktionsapparat 6 zugeführt und dort mit dem LOHC-Trägermedium kontaktiert. Der Wasserstoff wird unmittelbar an dem Wasserstoff-Trägermedium, also an dem LOHC, chemisch gebunden. Das hydrierte LOHC-Trägermedium wird über die Leitung 19 der ersten Speichereinheit 20 zugeführt und von dort aus über die erste Wasserstoff-Trägermedium-Schnittstelle 23 in ein dafür vorgesehenes Leitungsnetz oder in ein dafür vorgesehenes Tankfahrzeug eingespeist und an einen entfernten Ort zur Nutzung nach Wasserstofffreisetzung übermittelt.

Eine Versorgung der Anlage 1 mit unhydriertem LOHC-Trägermedium ist über eine zweite Speichereinheit 25 möglich. Die zweite Speichereinheit 25 kann beispielsweise über eine zweite Wasserstoff-Trägermedium-Schnittstelle 24 von extern gespeist werden. Es ist auch möglich, dass die Dehydriereinheit 21 mit der zweiten Speichereinheit 25 unmittelbar verbunden ist.

Nach dem Freisetzen von Wasserstoff in der Dehydriereinheit 21 kann dehydriertes LOHC-Trägermedium zur weiteren Verwendung in dem Kreislaufsystem der zweiten Speichereinheit 25 zugeführt werden.

Durch die Hydrierung des LOHC-Trägermediums in dem Reaktionsapparat 6 fällt Kohlendioxid in angereicherter Form an. Das Kohlendioxid ist von Wasserstoff weitgehend befreit. Das kohlendioxidreiche Gas, das bei der Hydrierung in dem Reaktionsapparat 6 anfällt, ist technisch nutzbar. Die Isoliereinheit 26 für das Kohlendioxid ist mit weiteren Komponenten zur Handhabung und/oder unmittelbaren Nutzung des Kohlendioxids verbindbar.

## Patentansprüche

1. Verfahren zum Erzeugen und Speichern von Wasserstoff umfassend die Verfahrensschritte
a. Bereitstellen eines Zwischengasgemisches mit erhöhtem Wasserstoffanteil,
b. Kontaktieren des Zwischengasgemisches mit einem Wasserstoff-Trägermedium zum Hydrieren des Wasserstoff-Trägermediums, so dass in dem Zwischengasgemisch enthaltener Wasserstoff unmittelbar an dem Wasserstoff-Trägermedium gebunden und eine selektive Abreicherung des Wasserstoffs in dem Zwischengasgemisch bewirkt wird,c.Speichern des hydrierten Wasserstoff-Trägermediums in einer ersten Speichereinheit (20),
wobei das Zwischengasgemisch als Gasanteile aufweist
- Kohlendioxid und/oder Methan, oder
- Stickstoff und/oder Methan, oder
- Stickstoff oder Argon,
wobei diese Gasanteile mit dem Wasserstoff-Trägermedium nicht reagieren und nicht an dem Wasserstoff-Trägermedium gebunden werden, wobei das Wasserstoff-Trägermedium ein flüssiger organischer Wasserstoffträger (LOHC)

2. Verfahren gemäß Anspruch 1, **gekennzeichnet durch** Bereitstellen eines mindestens eine Kohlenwasserstoff-Verbindung aufweisenden Rohstoffgasgemisches und Vorbehandeln des Rohstoffgasgemisches zum Herstellen des Zwischengasgemisches mit erhöhtem Wasserstoffanteil.

3. Verfahren gemäß Anspruch 2, **dadurch gekennzeichnet, dass** das Vorbehandeln ein Entschwefeln zum Reinigen des Rohstoffgasgemisches von Schwefelverbindungen und/oder eine, insbesondere zweistufige, Dampfreformierung, insbesondere in Gegenwart eines Katalysators, umfasst.

4. Verfahren gemäß einem der Ansprüche 2 oder 3, **dadurch gekennzeichnet, dass** das Vorbehandeln eine, insbesondere zweistufige, Wassergas-Shift-Reaktion, insbesondere in Gegenwart eines Katalysators, umfasst und/oder das Vorbehandeln eine selektive Entfernung von Kohlenmonoxid, insbesondere nach einer Wassergas-Shift-Reaktion, umfasst.

5. Verfahren gemäß einem der Ansprüche 2 bis 4, **dadurch gekennzeichnet, dass** das Vorbehandeln eine selektive Entfernung von Wasser, insbesondere nach einer Wassergas-Shift-Reaktion, umfasst.

6. Verfahren gemäß einem der vorstehenden Ansprüche, **gekennzeichnet durch** Zuführen von dehydriertem Wasserstoff-Trägermedium, insbesondere mittels einer Wasserstoff-Trägermedium-Schnittstelle.

7. Verfahren gemäß einem der vorstehenden Ansprüche, **gekennzeichnet durch** Abführen von hydriertem Wasserstoff-Trägermedium, insbesondere mittels einer, insbesondere weiteren, Wasserstoff-Trägermedium-Schnittstelle.

8. Verfahren gemäß einem der vorstehenden Ansprüche, **gekennzeichnet durch** Nutzen von Kohlendioxid als Produkt des Hydrierens des Wasserstoff-Trägermediums.

9. Verfahren zum Freisetzen von Wasserstoff umfassend ein Verfahren zum Erzeugen und Speichern von Wasserstoff gemäß einem der vorherigen Ansprüche und Dehydrieren des hydrierten Wasserstoff-Trägermediums zum Freisetzen von Wasserstoff.

## Claims

1. A process for producing and storing hydrogen, comprising the following process steps
a. provision of an intermediate gas mixture having an increased proportion of hydrogen,
b. contacting of the intermediate gas mixture with a hydrogen carrier medium in order to hydrogenate the hydrogen carrier medium so that hydrogen contained in the intermediate gas mixture is directly bound to the hydrogen carrier medium and selective depletion of hydrogen in the intermediate gas mixture is effected,
c. storing the hydrogenated hydrogen carrier medium in a first storage unit (20),
wherein the intermediate gas mixture has as gas components
- carbon dioxide and/or methane, or
- nitrogen and/or methane, or
- nitrogen or argon,
wherein these gas components do not react with the hydrogen carrier medium and are not bound to the hydrogen carrier medium,
wherein the hydrogen carrier medium is a liquid organic hydrogen carrier (LOHC).

2. A process according to claim 1, **characterized by** provision of a raw material gas mixture comprising at least one hydrocarbon compound and pretreatment of the raw material gas mixture to produce the intermediate gas mixture having an increased proportion of hydrogen.

3. A process according to claim 2, **characterized in that** the pretreatment comprises desulfurization in order to purify the raw material gas mixture from sulfur compounds and/or steam reforming, in particular two-stage steam reforming, in particular in the presence of a catalyst.

4. A process according to any one of claims 2 or 3, **characterized in that** the pretreatment comprises a water gas shift reaction, in particular a two-stage water gas shift reaction, in particular in the presence of a catalyst, and/or the pretreatment comprises a selective removal of carbon monoxide, in particular after a water gas shift reaction.

5. A process according to any one of claims 2 to 4, **characterized in that** the pretreatment comprises a selective removal of water, in particular after a water gas shift reaction.

6. A process according to any of the preceding claims, **characterized by** introduction of dehydrated hydrogen carrier medium, in particular by means of a hydrogen carrier medium interface.

7. A process according to one of the preceding claims, **characterized by** discharge of hydrogenated hydrogen carrier medium, in particular by means of a hydrogen carrier medium interface, in particular a further hydrogen carrier medium interface.

8. A process according to any of the preceding claims, **characterized by** utilization of carbon dioxide as a product of the hydrogenation of the hydrogen carrier medium.

9. A process for releasing hydrogen comprising a process for generating and storing hydrogen according to any one of the preceding claims and dehydrogenating the hydrogenated hydrogen carrier medium in order to release hydrogen.

## Revendications

1. Procédé pour produire et de stocker de l'hydrogène comprenant les étapes de procédé suivantes
a. mise à disposition d'un mélange de gaz intermédiaires avec une proportion accrue d'hydrogène,
b. mise en contact du mélange de gaz intermédiaires avec un milieu porteur d'hydrogène pour hydrogéner le milieu porteur d'hydrogène, de sorte que l'hydrogène contenu dans le mélange de gaz intermédiaires soit directement lié au milieu porteur d'hydrogène et qu'un appauvrissement sélectif de l'hydrogène dans le mélange de gaz intermédiaires soit effectué,
c. stockage du milieu porteur d'hydrogène hydrogéné dans une première unité de stockage (20),
dans lequel ledit mélange de gaz intermédiaires présente comme teneur en gaz
- du dioxyde de carbone et/ou du méthane, ou
- de l'azote et/ou du méthane, ou
- de l'azote ou d'argon,
dans lequel ces teneurs en gaz ne réagissent pas avec le milieu porteur d'hydrogène et ne sont pas liées au milieu porteur d'hydrogène,
dans lequel le milieu porteur d'hydrogène est un porteur d'hydrogène organique liquide (LOHC).

2. Procédé selon la revendication 1, **caractérisé par** la mise à disposition d'un mélange de gaz de matières premières comprenant au moins un composé hydrocarboné et le prétraitement du mélange de gaz de matières premières pour produire le mélange de gaz intermédiaires avec une teneur accrue en hydrogène.

3. Procédé selon la revendication 2, **caractérisé en ce que** le prétraitement comprend une désulfuration pour purifier le mélange de gaz de matières premières des composés soufrés et/ou un reformage à la vapeur, en particulier en deux étapes, en particulier en présence d'un catalyseur.

4. Procédé selon l'une quelconque des revendications 2 ou 3, **caractérisé en ce que** le prétraitement comprend une réaction de dégazage à l'eau, notamment en deux étapes, en particulier en présence d'un catalyseur, et/ou le prétraitement comprend une élimination sélective du mo-noxyde de carbone, en particulier après une réaction de dégazage à l'eau.

5. Procédé selon l'une quelconque des revendications 2 à 4, **caractérisé en ce que** le prétraitement comprend une élimination sélective de l'eau, en particulier après une réaction de dégazage à l'eau.

6. Procédé selon l'une quelconque des revendications précédentes, **caractérisé par** l'apport d'un milieu porteur d'hydrogène déshydrogéné, en particulier au moyen d'une interface de milieu porteur d'hydrogène.

7. Procédé selon l'une quelconque des revendications précédentes, **caractérisé par** l'évacuation du milieu porteur d'hydrogène hydrogéné, en particulier au moyen d'une interface, en particulier supplémentaire, de milieu porteur d'hydrogène.

8. Procédé selon l'une quelconque des revendications précédentes, **caractérisé par** l'utilisation de dioxyde de carbone comme produit de l'hydrogénation du milieu porteur d'hydrogène.

9. Procédé de libération d'hydrogène comprenant un procédé pour produire et stocker de l'hydrogène selon l'une quelconque des revendications précédentes et la déshydratation du milieu porteur d'hydrogène hydrogéné pour libérer de l'hydrogène.
